# EUROPEAN PATENT APPLICATION

(11) **EP 1 574 991 A1**
(43) Date of publication of application: **14.09.2005**
(21) Application number: 03780724.5
(22) Date of filing: 11.12.2003
(51) Int. Cl.: G06T 7/00

(54) **SIMILAR IMAGE EXTRACTION DEVICE, SIMILAR IMAGE EXTRACTION METHOD, AND SIMILAR IMAGE EXTRACTION PROGRAM**

(30) Priority: 11.12.2002 JP 2002358985
(71) Applicant: SEIKO EPSON CORPORATION, Tokyo 163-0811 (JP)
(72) Inventor: OUCHI, Makoto, c/o Seiko Epson Corporation, Suwa-shi, Nagano 392-8502 (JP)
(74) Representative: Winter, Brandl,&Fürniss, Hübner Röss, Kaiser, Polte Partnerschaft Patent- und Rechtsanwaltskanzlei
(86) International application number: PCT/JP2003/015852
(87) International publication number: WO 2004/053796

(57) **Abstract**

The conventional image retrieving method is not satisfactory in accuracy and speed of retrieval. There has been a demand for a method capable of rapidly retrieving images. The present invention achieves rapid image retrieval by acquiring the data of an original image and the data of an image for retrieval, setting up the matching pixels at more than one position in the original image and acquiring the gray levels of said matching pixels, setting up a region of the same size as said original image on said image for retrieval, acquiring the gray levels of the comparison pixels corresponding to the same position as said matching pixels in said region, computing the matching value which indicates similarity between the gray level of said matching pixel and the gray level of the comparison pixel, and computing similarity between the gray level of almost all pixels in said region for the region in which said matching value indicates high similarity and the gray level of almost all pixels in said original image, thereby extracting a region with high similarity.

## Description

### Technical Field to which the Invention Belongs

The present invention relates to a similar image extracting device, a similar image extracting method, and a similar image extracting program.

### Related Background Art

It is often necessary to retrieve images (entirely or partly) photographed by a digital camera or to retrieve positions at which panorama photographs are to be stitched. To meet this need, there have recently been proposed several methods for searching for the parts in an object to be retrieved which are similar to those in an original image. (See, for example, Japanese Patent Laid-open Nos. Hei-4-329490 and Sho-63-142991.)

The conventional retrieving method mentioned above is not satisfactory in accuracy and speed of retrieval. There has been a demand for a method capable of rapidly retrieving images. The method disclosed in the first patent document matches an image in an object frame with an image in a similar frame according to the similarity of their histograms. This method is incapable of accurate retrieval. By contrast, the method disclosed in the second patent document stitches one image with another by calculating the cross-correction coefficient f(τ) for vertical and horizontal pixels. Processing by this method is slow because calculations have to be performed on all pixels.

### Disclosure of the Invention

The present invention was completed to address the above-mentioned problems involved with the conventional technology. It is an object of the present invention to provide a similar image extracting device, a similar image extracting method, and a similar image extracting program, which permit accurate and speedy image retrieval.

The present invention to achieve the above-mentioned object is designed to search for a candidate for a similar part from an image to be retrieved by using a portion of pixels in an original image and comparing the candidate with the original image for pixel by pixel, thereby extracting a part similar to the original image from the image to be retrieved. The above-mentioned procedure according to the present invention employs a means to acquire image data, a means to acquire the gray level of the pixel to be matched, a means to acquire the gray level of the image to be compared, a means to compute the matching value, and a means for scanning. These means acquire data of an original image and data of an image to be retrieved, scan the same region in the image to be retrieved as that in the original image, and compute the matching value that indicates similarity between the gray level of the image to be matched and the gray level of the image to be compared.

Here, the pixels to be matched are arranged in more than one position within the original image. The number of pixels to be matched is less than that in the original image. Therefore, if the image for retrieval is scanned for each region of the same size as the original image, then it is possible to find a candidate for that part in the image for retrieval which is similar to the one in the original image simply by matching a portion of pixels in the image for retrieval with a portion of pixels in the original image. The processing in this manner is much faster than the conventional one in which all pixels of the image for retrieval are compared with all pixels of the original image.

Moreover, the present invention includes a means to extract a similar region which extracts a region similar to the original image from the candidates which have been found out as mentioned above. In other words, these candidates are highly similar to the original image as the matching value (as a measure of similarity) indicates; therefore, any one of them is considered to be an object for retrieval. So, similarity between all pixels in the candidates and all pixels in the original image is computed after the candidates are limited as mentioned above. As the result, it is likely that the most similar region is most similar to the original image, and if this region is extracted, then it is possible to retrieve the image which is similar to the original image among the images for retrieval.

According to the present invention, similarity is computed between all pixels of the original image and all pixels in more than one region which has become the candidate in the above-mentioned processing. This candidate is determined by only a portion of pixels as mentioned above; this means that the candidate can be determined rapidly. Moreover, this candidate is a part of the image for retrieval, and hence the object for which similarity is computed by comparison with all pixels of the original image also constitutes a part of the image for retrieval. This processing is much faster that the conventional one in which similarity between the image for retrieval and the original image is checked for all pixels.

The above-mentioned candidate is extracted according to the matching value which indicates similarity between pixels for matching and pixels for comparison. The matching value permits judgment about similarity between pixels for matching and pixels for comparison. However, it does not permit judgment as to whether or not all pixels in the original image are very similar to all pixels in the candidate. If the procedure is modified such that the above-mentioned candidate to be detected by the matching value is not limited to one, then it will be capable of extracting most similar regions from a plurality of candidates instead of extracting the regions which are eventually regarded as highly similar to the original image only by the matching value.

The image for retrieval may include a part which is identical to or highly similar to a part in the original image. In this case the candidate are very likely to include the part for retrieval. This permits highly accurate retrieval even by choosing candidates with a less number of matching pixels and then comparing them with all pixels in the original image. Incidentally, the present invention permits not only extraction of regions similar to the original image from the image for retrieval but also extraction of regions identical to the original image from the image for retrieval.

The above-mentioned matching pixels are not restricted in position and number so long as they constitute a portion of the original image and permit judgment as to whether or not the compared part is similar to the original image when they are matched with the pixel for comparison in the image for retrieval. A certain number of vertical or horizontal pixels in the original image may constitute the matching pixels.

To be concrete, the matching pixels may be arranged for every 5-10 vertical and horizontal pixels in the original image. Alternatively, the matching pixels may be arranged for every 1/8 - 1/16 of vertical or horizontal pixels in the original image. With this constitution, the matching pixels can be established in the original image without positional imbalance. The matching pixels may have pitches different from those mentioned above. Pitches may vary depending on the size of the original image and the image for retrieval and on the accuracy and speed of retrieval required.

The matching value is only required to indicate similarity between the gray level of the pixel for matching and the gray level of the pixel for comparison. It may be one which is a sum of differences between the gray level of the pixel for matching and the gray level of the pixel for comparison, both pixels corresponding to those at the same position. These differences are proportional to the differences between the gray level of the pixel for matching and the gray level of the pixel for comparison. This implies that the smaller the differences, the higher the similarity. When the means to extract similar regions extracts as the candidate the highly similar region from the matching value, the candidate may be extracted from the upper ones having smaller differences or the candidate may be extracted from those which have differences smaller than a certain threshold value. In any case, the candidate can be extracted rapidly only by addition and subtraction of the gray level of the pixel for matching and the gray level of the pixel for comparison.

The means to extract similar regions may be constructed in different ways to extract as the candidate the highly similar region from the matching value. For example, it may be so constructed as to store in the storage medium the region from which the matching value has been computed and the matching value itself and extract the highly similar region by reference to the storage medium after the scanning of the image for retrieval has been completed. One way to facilitate scanning is to sequentially store in the storage medium those data indicating the regions that give the matching value for high similarity, with the number of such regions being previously determined.

In this case, the means to compute the matching value may be constructed such that when it computes the matching value, it references the matching value of the region which has already been stored, and if the computed matching value indicates high similarity, then it updates the content stored in the storage medium. The effect of this constitution is that what is stored in the storage medium when the above-mentioned scanning is completed is the data of the above-mentioned regions which is concerned with several upper regions having high similarity. Consequently, the means to extract similar regions can process the upper regions having high similarity simply by referencing the data in the storage medium, and as soon as the scanning is completed, it shifts to the processing of calculating similarity between the gray level of almost all pixels in the above-mentioned region and the gray level of almost all pixels in the above-mentioned original image. Incidentally, the similarity may be any information about a measure indicating how all pixels of the original image are similar to all images of each of the above-mentioned candidates. Such information may contain the value obtained by adding differences between the gray level of all pixels of the original image and the gray level of all pixels of each candidate as in the case of the above-mentioned matching value.

As mentioned above, processing by the means to extract similar regions permits parts similar to the original image to be retrieved from the image for retrieval. However, the scanning means computes the matching value by sequentially changing the above-mentioned regions on the image for retrieval and hence if it performs scanning such that each region is selected without overlapping, then there is an instance where higher similarity is obtained by fine adjustment of each region. Thus, the means to extract similar regions may be constructed such that it extracts the above-mentioned region having high similarity and subsequently establishes near said region the region of approximately the same size as the above-mentioned original image and computes similarity between the thus established region and the above-mentioned original image. With this constitution, it regards the region having the highest similarity as an image similar to the original image, so that it extracts, as the similar image, the part which coincides best with the original image from the image for retrieval.

Incidentally, the similar image extracting device mentioned above may be used alone or as a built-in component in a certain device. The present invention may be embodied variously. The above-mentioned method for retrieving similar images by restricting the candidate for the part to be retrieved from the portion of pixels of the original image and subsequently calculating similarity for all pixels of the original image is apparently based on the present invention. Therefore, the present invention may be embodied as a method, as in Claim 6. The similar image extracting device may need a program to run it. In this case the present invention may be embodied as a program, as in Claim 7.

The concepts mentioned in Claims 2 and 5 may be applied to the above-mentioned method and program, as a matter of course. Any storage medium may be used to present the program; it includes, for example, magnetic recording media, magneto-optical recording media, and any recording media which will be developed in the future. The present invention may be embodied partly in the form software and partly in the form of hardware. The software may be partly recorded in a recording medium and read out when in need. In addition, the software may be in the form of primary or secondary duplicate.

### Brief Description of the Drawings

Fig. 1 is a block diagram showing the computer system.
Fig. 2 is a block diagram showing the functions of the similar image extracting program.
Fig. 3 is a flow chart showing the processing to be accomplished by the similar image extracting program.
Fig. 4 is a diagram illustrating an example of the processing in one embodiment of the present invention.
Fig. 5 is a diagram illustrating an example of the processing in another embodiment of the present invention.

### Description of Special Embodiment

The embodiment of the present invention will be described in the following order.
(1) Constitution of hardware system
(2) Constitution and processing of similar image extracting program
(3) Example of similar image extracting process
(4) Other embodiments

### (1) Constitution of system hardware

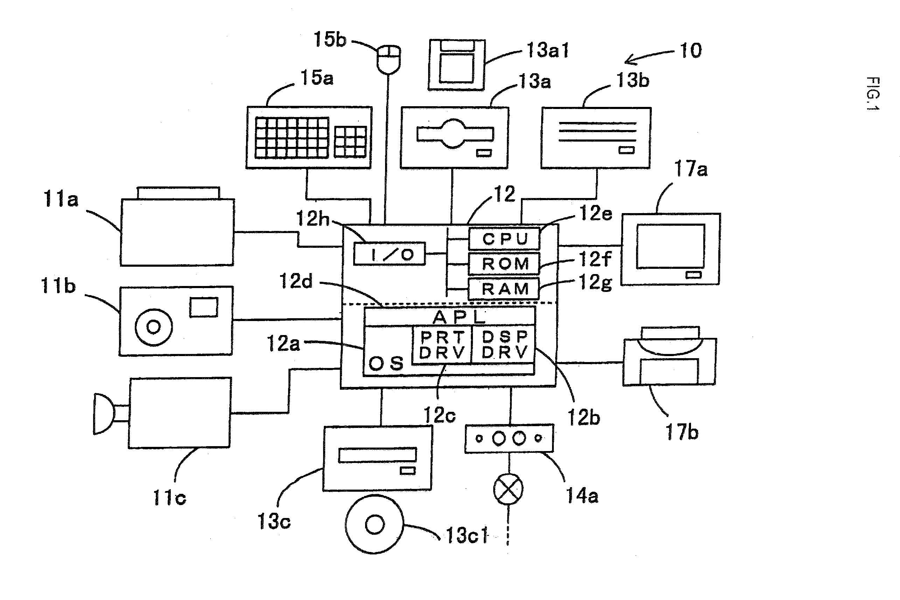

Fig. 1 is a block diagram showing the computer system which executes the similar image extracting program according to one embodiment of the present invention. There is shown a computer system 10 which is comprised of a computer proper 12 and image input devices, including a scanner 11a, a digital camera 11b, and a video camera 11c, connected thereto. Each input device generates an image with pixels arranged in dot matrix and outputs it to the computer proper 12. The image data is expressed in terms of three primary colors (RGB), each having 256 gray levels, so that they represent about 16,700,000 colors.

The computer proper 12 has external auxiliary memory devices, including a flexible disc drive 13a, a hard disc 13b, and a CD-ROM drive 13c, connected thereto. The hard disc 13b stores important programs for the system, and it reads programs and image data from a flexible disc 13a1 and a CD-ROM 13c1, when necessary.

In addition, the computer proper 12 has a modem 14a connected thereto, which is a communication device for connection to the outside network. This system permits the down-loading of software and image data from the outside network through the public telephone line. Although the system in this example is constructed such that access to outside is achieved by the modem 14a through the telephone line, it may be constructed such that access to the network is achieved through a LAN adaptor. Alternatively, access to the outside circuit through a router is also possible. In addition, the computer proper 12 has a keyboard 15a and a mouse 15b connected thereto. The computer proper 12 acquires the data of original image and the data of image for retrieval, which are to be processed according to the present invention, from the above-mentioned input devices, external auxiliary memory devices, and communication devices.

In addition, the computer proper 12 has image output devices connected thereto, which include a display 17a and a color printer 17b. The display 17a has a display area composed of 1024 pixels in the horizontal direction and 768 pixels in the vertical direction, each pixel representing any one of 16,700,000 colors. This resolution is a mere example, and it may be properly changed to 640 x 480 pixels or 800 x 600 pixels.

The computer proper 12 executes prescribed programs in order to acquire and output images through the image input and output devices. One of the basic programs is an operating system (OS) 12a. This operating system 12a includes a display driver (DSPDRV) 12b for the display 17a and a printer driver (PRTDRV) 12c for the color printer 17b. These drivers 12b and 12c are dependent on the type of the display 17a and the color printer 17b, and they may be modified or added to the operating system 12a according to the type of the devices. They may achieve additional functions characteristic of the specific device type. In other words, the operating system 12a combined with the device drivers achieves various additional processing while supporting the standard common to various devices.

The computer proper 12 is equipped with a CPU 12e, a ROM 12f, and an I/O 12h, which are necessary for programs to be executed. The CPU 12e performs arithmetic operations while using the ROM 12f as a temporary work area, memory area, or program area. It also executes the basic program written in the RAM 12g and controls external and internal devices connected thereto through the I/O 12h.

The operating system 12a as the basic program permits the application (APL) 12d to be executed. What the application 12d processes is widely varied; it monitors the keyboard 15a and the mouse 15b and controls outside devices in response to their operation. It also sends the results of operation to the display 17a and the color printer 17b.

The color printer 17b prints characters and images with color dots on printing paper in response to the printer driver 12c according to print data produced by the application 12d. The similar image extracting program of the present invention may be available as the above-mentioned application 12d or as a program to execute a part of the functions of the application 12d. It may be incorporated with a program to make panorama photographs or a program to retrieve images.

### (2) Constitution and processing of similar image extracting program

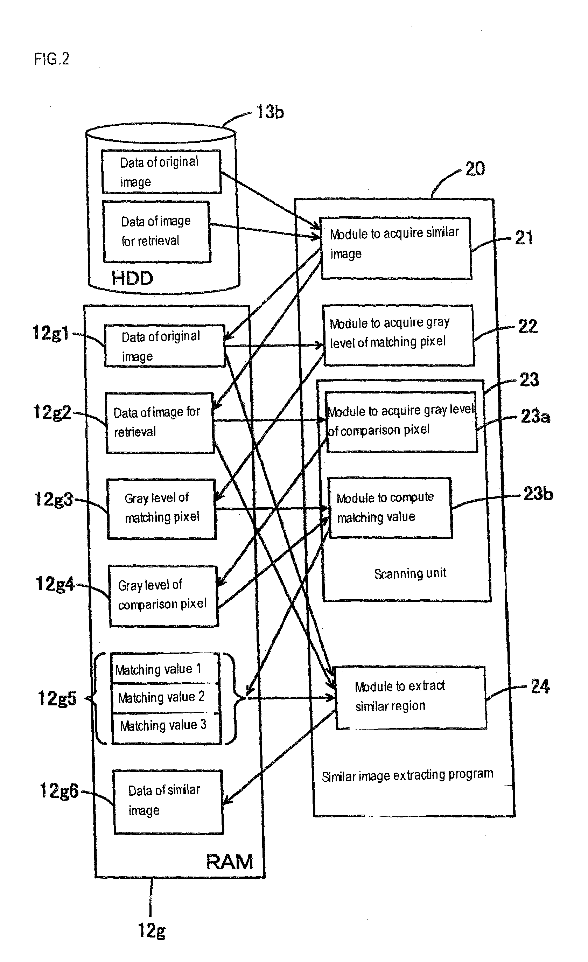

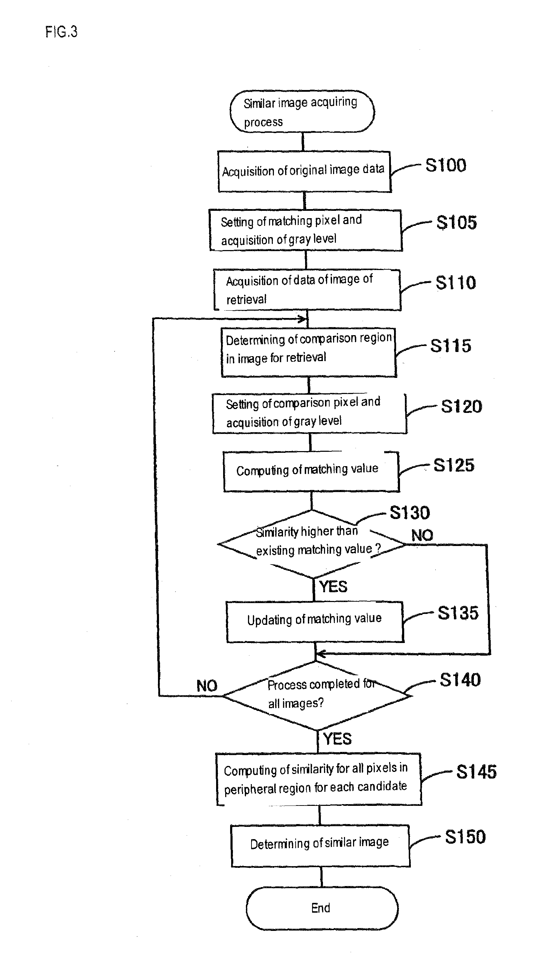

Fig. 2 is a block diagram showing the functions of the similar image extracting program. It also shows the data which is used in the processing. Fig. 3 is a flow chart showing the processing to be accomplished by the similar image extracting program. The functions and processing of the program will be described below with reference to these figures. The similar image extracting program 20 is comprised of a module 21 to acquire image data, a module 22 to acquire the gray levels of matching pixels, a module 24 to extract similar regions, and a scanning unit 23. The scanning unit 23 is comprised of a module 23a to acquire the gray levels of comparison pixels and a module 23b to compute the matching value.

Figs. 2 and 3 illustrate an embodiment in which the data of original image and the data of image for retrieval are stored in the hard disc 13b. These data may be stored in other media than the hard disc, or they may be acquired from a digital still camera 11b or the like. As soon as the similar image extracting program 20 starts processing, the image data acquisition module 21 reads the data of original image (12g1) from the hard disc 13b in Step S100 and then temporarily stores them in the RAM 12g. The image data to be processed may be all color components or specific color components or other components than RGB (e.g., luminance components).

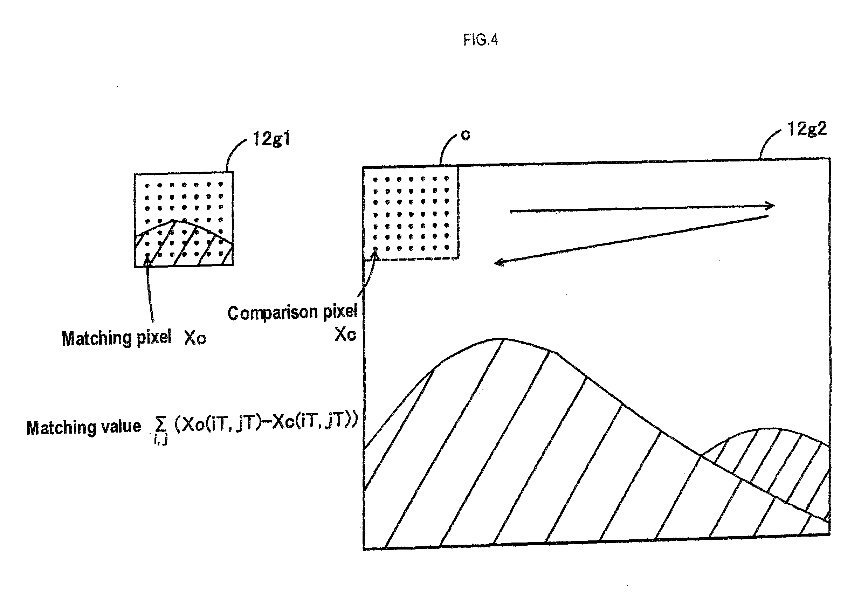

In Step S105, the module 22 (to acquire the gray level of matching pixels) sets up the matching pixels for the data 12g1 of the original image and acquires the gray level of the matching pixels (the gray level 12g3 of the matching pixels). Fig. 4 shows an example of the processing which is carried out in the embodiment (mentioned later in more detail). In Step S105, a very small portion of pixels in the original image is used as the matching pixels, as indicated by black dots in the original image data 12g1 in Fig. 4. The matching pixels are set at a certain pixel pitch. The matching pixels may be set at a pitch of 1/m (m = natural number) of the number of vertical and horizontal pixels in the original image. Alternatively, they may be set at a pitch of every 1 pixels (1 = natural number). The position or the pitch may be determined in various ways.

In Step S110, the image data acquisition module 21 reads the data of the image for retrieval from the hard disc 13b and temporarily stores it in the RAM 12g. (This data is designated as 12g2.) In Steps S115 to S140, the loop of process is performed under the control by the scanning unit 23. That is, in Step S115, the module 23a to acquire the gray level of pixels for comparison sets up the region of the same size as the original image on the image for retrieval. (This region is referred to as the comparison region hereinafter.) In Step 120, the module 23a to acquire the gray level of image for comparison sets up the pixels for comparison which correspond to the same position as the above-mentioned matching pixels in the comparison region and then acquires the gray level of pixels for comparison (which is designated as 12g4).

In Step S125, the module 23b to compute the matching value references the gray level 12g3 of matching pixels and the gray level 12g4 of pixels for comparison and then computes the matching value. This matching value is a sum of differences between the gray level of matching pixels corresponding to the same position and the gray level of pixels for comparison. The smaller the value, the higher the similarity. Moreover, the module 23b to compute the matching value stores in the RAM 12g the top three with high similarity indicated by the matching value in Steps S130 and S135. To be concrete, the RAM 12g has a memory capacity large enough to store the matching value and the matching value 12g5 indicating the position of the region that gives that matching value. The memory capacity is large enough to store the data for three regions.

In Step S130, judgment is made as to whether or not the matching value computed as mentioned above is smaller (high similarity) than the matching value which has already been stored in the RAM 12g. If it is found that the computed value is smaller than the existing value, then the matching value 12g5 in the RAM 12g is replaced by the computed matching value (in Step 5135). In other words, the maximum matching value is deleted from the existing matching values 12g5 and the computed matching value is stored in the RAM 12g. If judgment in Step S130 shows that the computed value is not smaller than the existing value, then the step of updating the RAM 12g is skipped.

In Step S140, judgment is made as to whether or not the processing to compute the matching value for the above-mentioned comparison region has been completed for all the regions in the image for retrieval. The processing after Step S115 is repeated until an affirmative judgment is reached. According to this embodiment, the repeating stage in Step S115 sets up a new comparison region which does not overlap within the image for retrieval; however, the processing may be performed such that the comparison region is changed with partial overlapping.

Since the RAM 12g has a storage capacity large enough to store the matching values for three places, as mentioned above, after it has been judged in Step S140 that the processing to compute the matching values for all the regions within the image for retrieval was completed, it follows that the RAM 12g stores the matching values 12g5 up to the top three ranks in similarity in each comparison region. Incidentally, for the initial three repeated processing, the RAM 12g stores only three or less of the existing matching value. Therefore, it is only necessary to perform the processing to store the initial three places without judgment. Of course, it is possible to let the RAM 12g store the maximum three values of the matching value as the initial value.

In Step S145, the comparison region indicated by the above-mentioned matching value 12g5 is made the candidate and the similar region extracting module 24 computes the similarity between the candidate and the original image. It also sets the peripheral region of the same size as the above-mentioned original image at the position where the position of the each candidate has been moved up and down and right and left, and it computes the similarity between the image in the peripheral region and the original image. Here, the similarity is the value obtained by adding differences of the gray levels of pixels corresponding to the same position for all pixels belonging to the original image and the comparison region (or the peripheral region thereof). Therefore, the similarity in this embodiment is different from the above-mentioned matching value in the number of pixels to be treated but is the same in concept. It follows that the smaller the similarity, the more the original image is similar to the comparison region (or the peripheral region thereof). In Step S150, the comparison region (or the peripheral region thereof) which has the minimum value (or most similar) among the similarity computed in Step S145 is made the similar image, and the data representing the position of the similar image is stored in the RAM 12g. (This data is designated as similar image data 12g6.)

### (3) Example of similar image extracting process

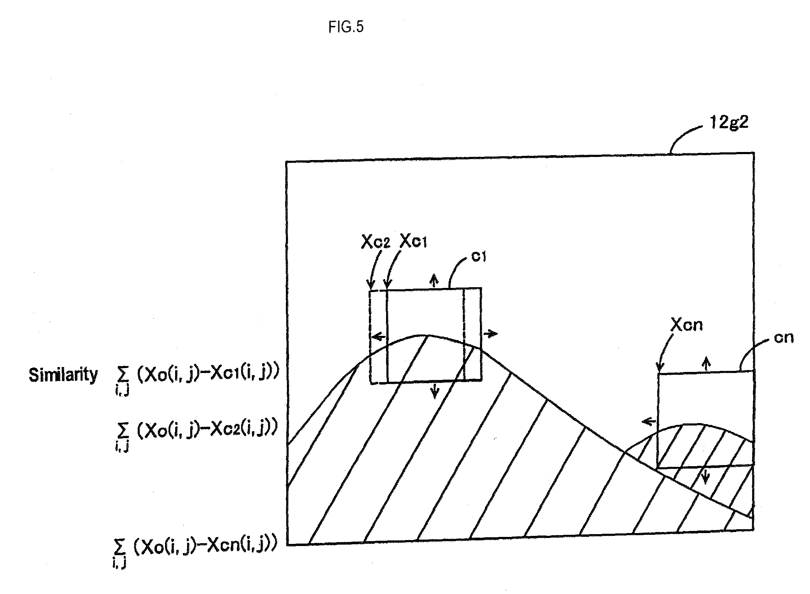

Actions involved in the above-mentioned constitution and processing will be explained in the following. Figs. 4 and 5 are diagrams illustrating how to retrieve a part similar to the image represented by the data 12g1 of the original image from the data 12g2 of the image for retrieval, which is a photograph of mountains. The module 22 to acquire the gray level of the matching pixel sets matching pixels X₀ within the original image data 12g1, as shown in the left of Fig. 4, and then acquires the gray level of each matching pixel X₀. The scanning unit 23 sets the comparison region C for the retrieve image data 12g2, as shown in the right of Fig. 4, and then sequentially changes the comparison region C within the retrieve image data 12g2.

Scanning is performed in such a way that the comparison region C is moved from left to right, and when the comparison region C reaches the right end, the comparison region C is moved downward and then moved again from left to right until the retrieve image data 12g2 is entirely scanned. Moreover, during this scanning process, the comparison pixel gray level acquiring module 23a sets the comparison pixel X_{c} corresponding to the position of the matching pixel X₀ within the comparison region, and then it acquires the gray level of each comparison pixel X_{c}. The matching value calculating module 23b computes the matching value by adding up differences between the matching pixel and the comparison pixel.

Incidentally, the matching value is given by the formula Σ(X₀ (iT,jT) - X_{c}(iT,jT)), as shown in Fig. 4. In this formula, i represents a natural number to specify the pixel position in the horizontal direction, and j represents a natural number to specify the pixel position in the vertical direction. The origin in parentheses represents the coordinates at the left end of the original image or the comparison region. Therefore, the combination of i and j specifies the matching pixel in the original image or the comparison pixel in the comparison region. T denotes the pitch of matching pixels or comparison pixel. It suggests that pixels are acquired at a prescribe pitch in the original image and the matching value is computed.

In other words, the matching pixel X₀ and the comparison pixel X_{c} represent a very small portion of pixels in the original image and comparison region. Calculating the matching value from such a few pixels is much faster than calculating the matching value for all pixels in the original image. The matching value calculating module 23b stores in the RAM 12b the matching values of upper three ranks in the descending order of similarity.

The similar region extracting module 24 references the matching value 12g5 stored in the RAM 12g and specifies three positions in the comparison region which are indicated by the matching value 12g5. And, it sets up the regions (peripheral regions) of the same size as the comparison regions at the upper and lower sides and the right and left sides of these comparison regions, and then it computes similarity between all pixels in the original image and all pixels in the comparison region (or peripheral region). In other words, it computes similarity by moving the comparison region to the position indicated by a dotted line (as shown in Fig. 5) in the case where the comparison regions C1, Cn, etc. have been extracted as the candidate based on the matching value 12g5.

The similarity extracting module 24 computes the similarity according to the formula Σ(X₀(i,j) - X_{cn}(i,j)) as shown in Fig. 5, where i and j are natural numbers representing the coordinates of the original image, comparison region, and peripheral region. In this case, too, the origin is at the left-end coordinates of the image. Incidentally, the i and j have wider ranges than those shown in Fig. 4. The range of i is the number of horizontal pixels in the original image, comparison region, and peripheral region. The range of j is the number of horizontal pixels in the original image, comparison region, and peripheral region. n denotes a natural number which specifies the comparison region and its peripheral region.

The similarity computed by the above-mentioned formula permits extraction of the region most similar to the original image from the comparison region and the peripheral region. Since the comparison region is a region which has been extracted as the candidate of the similar image by the matching value shown in Fig. 4 from the data 12g2 of the image for retrieval, the region which has been extracted as the similar part based on the similarity shown in Fig. 5 is highly likely to be most similar to the original image among all the data 12g2 of the image for retrieval. Therefore, the foregoing procedure determines the similar image. As mentioned above, the present invention determines the comparison region based on a very small portion of pixels; however, the similar region extracting module 24 eventually performs comparison for all pixels, with the object of comparison expanded to the peripheral region. Therefore the present invention is capable of retrieving similar images very accurately.

### (4) Other embodiments

The above-mentioned constitution and procedure for similar image extraction are given as a mere example. Their various modifications should be possible. For example, the similar region extracting module 24 may compute the similarity only for the comparison region (as the candidate) and extract the most similar region without expanding the object for computation of similarity in the peripheral region. In this case, the thus extracted region is not necessarily most similar to the original image within the image for retrieval; however, in this way it is possible to very rapidly retrieve the part which is close to the most similar image.

In the above-mentioned embodiment, the scanning unit 23 scans all of the image for retrieval while avoiding duplication when the comparison region is set up; however, this constitution is not essential. The following modification should be possible. If the matching value computed by the matching value computing module 23b is very large (or the similarity is very small), it increases the scanning pitch (or setting the next comparison region far) when the next comparison region is set, and if the matching value is large, the scanning pitch is reduced. Another modification may be made such that if the matching value is vary large, the number of matching pixels is reduced. These modifications will effectively reduce redundant steps and rapidly extract the comparison region for the candidate.

Moreover, the present invention may be used in various situations. For example, it may be applied to making a panorama photograph. In this case, it is necessary to specify regions in which two or more photographs to be stitched together coincide with each other. To achieve this object, the original image is cut out of one picture and the similar image extracting program of the present invention is performed on the other picture. Thus, the coinciding parts of the two pictures to be stitched together can be easily specified. In this case, there may be an instance in which more than one candidate is selected for the comparison region; however, necessary steps will be completed rapidly on the assumption that the part regarded as the similar image exists in the left side of one image and the right side of the other image.

### Industrial Applicability

The device, method, and program according to the present invention are used to retrieve a certain part within an image for retrieval which is similar to a part in the original image when it is necessary to retrieve images (entirely or partly) photographed by a digital camera or to retrieve positions at which images are to be stitched for a panorama photograph.

## Claims

1. A similar image extracting device which comprises:
an image data acquiring means to acquire the data of an original image represented by dot-matrix-like pixels and the data of an image for retrieval which is also represented by dot-matrix-like pixels and is similar to said original image,
a matching pixel gray level acquiring means to set up the matching pixel at more than one position in said original image and acquire the gray level of said matching pixel,
a comparison pixel gray level acquiring means to set up a region of the same size as said original image on said image for retrieval and acquire the gray level of the comparison pixel corresponding to the same position as said matching pixel in said region,
a matching value computing means to compute the matching value which indicates similarity between the gray level of said matching pixel and the gray level of the comparison pixel,
a scanning means to sequentially change said region on said image for retrieval, thereby acquiring the gray level of said comparison pixel and computing the matching value, and
a similar region extracting means to compute similarity between the gray level of almost all pixels in said region for the region in which said matching value indicates high similarity and the gray level of almost all pixels in said original image, thereby extracting a region with high similarity.

2. The similar image extracting device as defined in Claim 1, wherein said matching pixel gray level acquiring means sets up the matching pixels for every fixed number of vertical or horizontal pixels in said original image.

3. The similar image extracting device as defined in Claim 1 or 2, wherein said matching value is a value obtained by adding up differences between the gray level of said matching pixels and the gray level of the comparison pixels corresponding to the same position.

4. The similar image extracting device as defined in any of Claims 1 to 3, which further comprises a storage medium to store the data indicating the region which gives the matching value for high similarity, with the number of regions being predetermined, and said matching value computing means updates the content stored in said storage medium when the matching value computed in the course of said scanning indicates higher similarity than the matching value in the previously stored region.

5. The similar image extracting device as defined in any of Claims 1 to 4, wherein said similar region extracting means sets up a region of the same size as said original image in the neighborhood of said region after extracting said region having high similarity, computes similarity between the thus set region and said original image, and assigns the region having the highest similarity to the image similar to the original image.

6. A similar image extracting method which comprises:
an image data acquiring step to acquire the data of an original image represented by dot-matrix-like pixels and the data of an image for retrieval which is also represented by dot-matrix-like pixels and is similar to said original image,
a matching pixel gray level acquiring step to set up the matching pixel at more than one position in said original image and acquire the gray level of said matching pixel,
a step to set up a region of the same size as said original image on said image for retrieval and, while sequentially changing said region, acquire the gray level of the comparison pixel corresponding to the same position as said matching pixel in said region and compute the matching value which indicates similarity between the gray level of said matching pixel and the gray level of the comparison pixel, and
a step to compute similarity between the gray level of almost all pixels in said region for the region in which said matching value indicates high similarity and the gray level of almost all pixels in said original image, thereby extracting a region with high similarity.

7. A similar image extracting program for temporarily storing the data of an original image represented by dot-matrix-like pixels and the data of an image for retrieval which is also represented by dot-matrix-like pixels and is similar to said original image and retrieving an image similar to the original image from the image for retrieval, said program comprising allowing a computer to realize:
a matching pixel gray level acquiring function to set up the matching pixel at more than one position in said original image and acquire the gray level of said matching pixel,
a comparison pixel gray level acquiring function to set up a region of the same size as said original image on said image for retrieval and acquire the gray level of the comparison pixel corresponding to the same position as said matching pixel in said region,
a matching value computing function to compute the matching value which indicates similarity between the gray level of said matching pixel and the gray level of the comparison pixel,
a scanning function to sequentially change said region on said image for retrieval, thereby acquiring the gray level of said comparison pixel and computing the matching value, and
a similar region extracting function to compute similarity between the gray level of almost all pixels in said region for the region in which said matching value indicates high similarity and the gray level of almost all pixels in said original image, thereby extracting a region with high similarity.
